# EUROPEAN PATENT SPECIFICATION

(11) **EP 1 788 365 B1**
(45) Date of publication and mention of the grant of the patent: **17.12.2014**
(21) Application number: 04798242.6
(22) Date of filing: 18.11.2004
(51) Int. Cl.: B66B 7/06, B66B 1/34, G01G 19/18, G01L 5/10

(54) **LOAD CELL FOR ELEVATORS AND SIMILAR**
KRAFTAUFNEHMER FÜR AUFZÜGE UND ÄHNLICHES
CELLULE DE CHARGE POUR ASCENSEURS ET AUTRES DISPOSITIFS SEMBLABLES

(30) Priority: 02.09.2004 ES 200402125
(43) Date of publication of application: 23.05.2007
(73) Proprietor: Dinacell Electronica, S.L., 28529 Rivas Vaciamadrid (ES)
(72) Inventor: GONZÁLEZ GALLEGOS, Rafael, E-28529 Rivas Vaciamadrid (ES)
(74) Representative: Elzaburu S.L.P.
(86) International application number: PCT/ES2004/000515
(87) International publication number: WO 2006/042875

(56) References cited:
- ES-A1- 2 187 298
- JP-A- 2003 222 561
- US-A- 4 118 978
- US-A- 4 577 512
- US-A- 6 122 978
- US-B1- 6 209 401

## Description

### Object of the Invention

The present invention relates to a load cell for elevators and the like providing new essential features and notable: advantages with respect to the known and used means for the same purposes in the current state or the art.

More specifically, the invention proposes the development of a cell of the type used in operations for evaluating the magnitude of a load according to the deformation experienced due to the effect of the stress to which it is subjected and the transmission of this stress to the strain gages incorporated in predetermined positions of the cell body. The load cell proposed by the invention has been designed for its use in elevators or the like, and responds to a design pattern that has been especially devised for its use with planar suspension elements, configured in the form of a belt or the like, with a predetermined width.

The field of application of the invention is comprised within the industrial sector dedicated to ∼he manufacture and/or installation of systems for weighing, detecting and/or evaluating loads in devices and apparatuses subjected to variable or fixed loads.

### Background and Summary of the Invention

The fact that the safe operation of an elevator, hoist or the like is inexorably associated to a limitation of the weight carried by the car is generally known by everyone. One of the systems usually used for measuring the load in an elevator is based on the use of load cells, basically consisting of elements designed to be installed in predetermined locations of the support and bearing elements of those systems in which it is necessary to measure the magnitude of a load. A well known specific example in practice consists of the case in which the elevators and the hoists, used to carry persons or materials, in which the load cells are in charge of transmitting a signal derived from the stress, to which the latter are subjected, to the control devices, such that the control devices determine if the load that must be borne and/or carried is within the pre-established limits. Of course, the aforementioned practical example is only a specific application case and in no case does it intend to limit the application field, but to simply serve as an illustration with a view to facilitating the comprehension of the description which will be made below.

According to the known designs, load cells incorporate strain gages in predetermined positions which experience deformations derived from the result of the stress to which the cell is subjected, which is translated into an electric signal the magnitude of which depends, in each type of cell, of the stress affecting then. As stated previously, this electric signal, which is conveniently used and managed by the associated control means, serves to determine the magnitude of the stress and therefore know if it is within the established limits for the development of the operation with absolute normality and safety. The mentioned strain gages are usually and normally housed inside the cavities made for that purpose in the cell body in previously calculated positions according to the stress distribution provided for the cell, such that a correct and accurate operation of the assembly can be assured as much as possible.

When this type of load cells is applied to elevators or hoists, the positioning thereof is related to the support ropes or elements of the car the weight of which is to be controlled, such that the load variations experienced by such support elements can be directly acknowledged by the load cells. To that end, load cells are known in the current state of the art which are configured by way of a Bolid metallic body with predetermined elastic features, a rectangular prismatic configuration, in one of the larger faces of which a hollowing has been carried out for locating and housing the strain gage in charge of transforming the elastic deformation experienced as a result of the load into an electric signal which is supplied to the measuring and control means, and the cell of which further has three elements by way of pivots or lugs projected orthogonally to said larger face, joined to the body in predetermined longitudinal positions, of which the central lug is not aligned with respect to the two end pivots or lugs, and between which the support rope in which it is assembled is passed, alternating the position in the successlve lugs, to that end the latter are configured with ring-shaped groves for a safe housing of said support rope. In this way, it is assured that the variation in the stress of the rope as a result of the variations of the load it supports, are directly transmitted to the cell body through the mentioned pivots or lugs and finally to the strain gage for generating the equally variable corresponding electric signal.

The type of load cell described above has a simple conception and allows a handling and assembly that are safe, simple and quick to carry out, being especially indicated for those cases in which the load is suspended by means of ropes.

However, there is currently a tendency in several installations to the use of support elements which are not made in the form of ropes but on the other hand are made in the form of planar belts with a predetermined width and thickness, made based on a flexible material the inside of which incorporates a metal core formed by several metallic filiform elements distributed through the width of the belt in positions separated from one another. The structural and dimensional features of these belts prevent the use of load cells of the type described previously because the latter are not only impossible to introduce in the ring-shaped recesses or grooves of the pivots or lugs of the load cell, but are normally even wider than the length of the lugs themselves, therefore the coupling of the planar belt to the latter is not a stable and long-lasting application, and thus the use of this type of load cell is not possible in an application with a planar belt for supporting the load.

Considering the current need in the state of the art, the main aim of the present invention is to design and construct a modified, improved load cell that is especially indicated for its use with planar support elements, of the type of a belt or the like, by which effective and long-lasting solutions are provided for the problem set forth. This aim has been fully reached by means of the load cell that will be the object of the following description, the main features of which are gathered in the characterizing part of the following claim 1.

The cell proposed by the invention essentially consists of two separate, independent elements but constructed in a mutually attachable form, consisting of a real cell body and an outer casing of which said cell body consists, in a manner similar to known cells, of a rectangular prismatic body which at one of its larger faces has a hollowing for housing a suitable strain gage for the detection of the deformation experienced by the cell due to the effect of the load and the generation of a proportional electric signal which is sent to the measuring and control means through a suitable cable, and from the larger face of which three orthogonally extended rods also project, located in predetermined positions along the length of the cell body and with a misalignment of the central rod with respect to the ends, with the peculiarity that said rods are not provided with any ring-shaped recess as occurs in those used currently, and they are further sized suitably for a correct coupling to the support belt, whereas the casing is generally prismatic, internally hollow and open at one of the larger sides for its coupling to the cell body and provided in both smaller opposite sides with openings for the passage of the support belt to which the assembly is coupled. In the wall opposite to the open larger side, the formation stops with respect to the side edge of the belt passing through its inside is foreseen, whereas in relation to both larger faces of the prism it has a recess extended to the entire height and intended to receive, house and safely retain the sides of the cell body of the support belt to which the assembly is coupled. In the wall opposite to the open larger side, the formation at the inner face of respective projecting thickenings forming stops with respect to the side edge of the belt passing through its inside is foreseen, whereas in relation to both larger faces of the prism it has a recess extended to the entire height and intended to receive, house and safely retain the sides of the cell body.

Document US 6.209.401 describes a measuring device for the mechanical tension on an object made of fabric and wire in situations of product conveying and to the effect of applying the correct caliber of pre-tensor force in order to guarantee a safe transport, allowing the device for the force to be measured before or even during the transport. The device is portable and the measurement is verified by acting on a lever which, in turn, acts on a roller causing the measured object to be curved by means of a number of rollers. The perpendicular forced induced by this curvature is recorded, re-calculated and presented as the force acting on the measured object. The device consists of two elements that determine the width for a precise lateral positioning of the measure object and an adjustable device for compensating for the force corresponding to the free length of the measured object.

Document JP 2003222561 describes a mechanical tension detector that uses two pairs of superimposed bars between which a belt displaces and on which a load is to be measured, a plate in an intermediate longitudinal position, non-aligned with mentioned pair of bars, so that the belt goes over the plate so that such plate acts en the head of a measuring piece for measuring contact pressure.

Document US 4.577.512 describes a measuring device for measuring the tension on a wire that consists of a lodging space divided into a data-reading head and the remainder of the space, in which the reading head can be rotated 90° relative to the rest. The measuring device consists of a piece that projects from the lodging space with which the mechanical tension on the wire can be detected and a mechanical and electronic equipment placed in the interior of the lodging space in order to evaluate the result of the measurement, being also endowed with an indicator for the representation of the measured value.

Document ES 2 187 298 describes a sensor for measuring mechanical tensions in wires that consists of parallelepiped-shaped metallic body; from the larger faces of this body there are projecting pivots for holding the wire with guiding channelings or grooves, and with an area sensitive to deformation in which extensometric bands are placed.

Document US 6.122.978 describes a monitoring device for the mechanical tension on a fabric in motion that consists of a cantilever tension bar, fixed by one flexing end to an extremal supporting axis in the guiding roller that supports the fabric. A double-bar transducer endowed with extensometric gauges at the flexible area on the bar is coupled to the axis that supports the moving fabric. The extensometric gauges execute the measurement of the radial forces applied to the axis by the fabric.

### Brief Description of the Drawings

These and other features and advantages of the invention will be more clearly shown in the following detailed description of a preferred embodiment, given only by way of an illustrative and non-limiting example, with reference to the attached drawings in which:
Figures 1a and 1b show respectively front elevational and side elevational views of the cell body constructed according to the invention;
Figures 2a to 2b show side elevational, front elevational, rear elevational, upper plan and lower plan views of the outer casing;
Figure 3 shows a cross-section made by line III-III of Figure 2a;
Figure 4 shows a perspective view of the assembly of both elements forming the load cell of the invention, and
Figure 5 finally shows a representation of the assembly of the load cell of the invention in its operative state.

### Description of a Preferred Embodiment

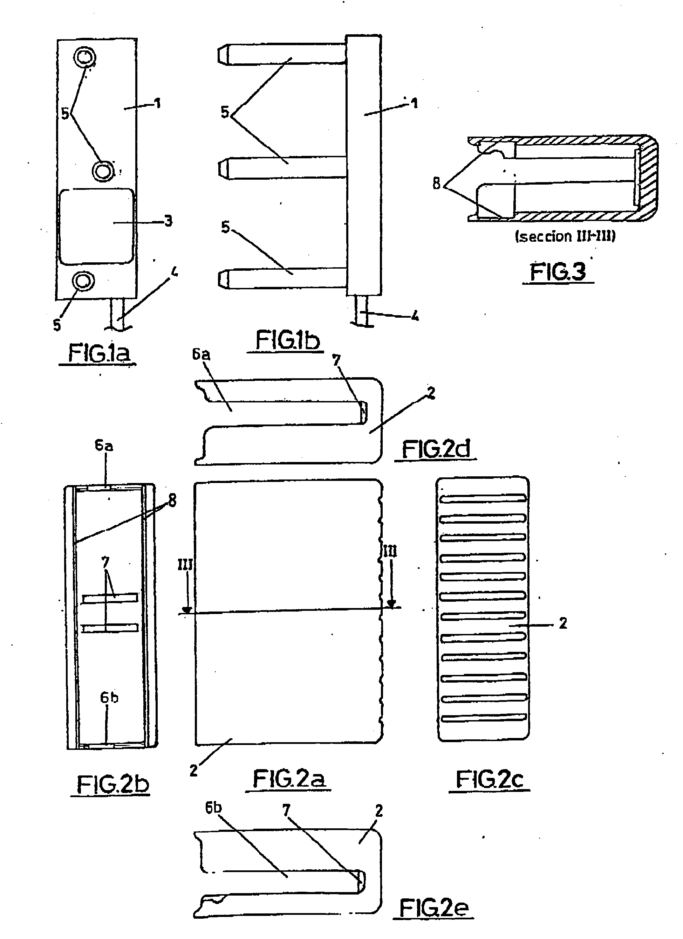

As indicated in the foregoing, the detailed description of the preferred embodiment of the invention will be carried out below with the aid of the attached drawings, through which the same reference numbers will be used to designate same or similar parts. As has been stated, the cell of the invention is formed by a cell body 1 and a casing 2, of which the cell body is made like the cells of the current state of the art, from a solid metallic prismatic body, in one of the larger faces of which a portion 3 has been recessed for housing the corresponding strain gage which can be connected by means of a cable 4 with the external measuring and control means of the load according to the magnitude of the electric signal generated by said strain gage as a result of the deformation experienced by the body 1 when it is subjected to variable loads. According to the invention, the body 1 has been provided with three rods 5 having a smooth surface and not being provided with any recess or grove, joined thereto in predetermined positions, made of a metallic material, with pre-established dimensions and as is usual, they are distributed along the body 1 in longitudinally unaligned positions as can be seen in Figure 1a.

If the representations of Figure 2 (sub-figures 2a to 2e) are considered, the representation of a plurality of views related to the casing provided by the invention for its coupling to the cell body 1 when the assembly is in its operative condition can be seen. As is observed the casing 2 is generally prismatic, internally hollow, open at one of the smaller side faces, closed at the opposite face and provided in both bases with openings 6a, 6b in correspondingly opposite positions. At the inner face of the closed smaller side wall the formation of two projecting portions 7 extended traverse to almost the entire width of said face has been foreseen, whereas in the inside of both larger side faces, the formation of a recessed area 8 extended to the total height of said faces, next to the front edge thereof has been foreseen.

These recessed areas 8 can be seen with more detail in the view shown in Figure 3, corresponding to a section taken by line III-III of Figure 2a, the dimensions of which coincide with the sides of the cell body 1, said areas being intended to receive, house and retain said body in the condition of mutually coupled body and casing.

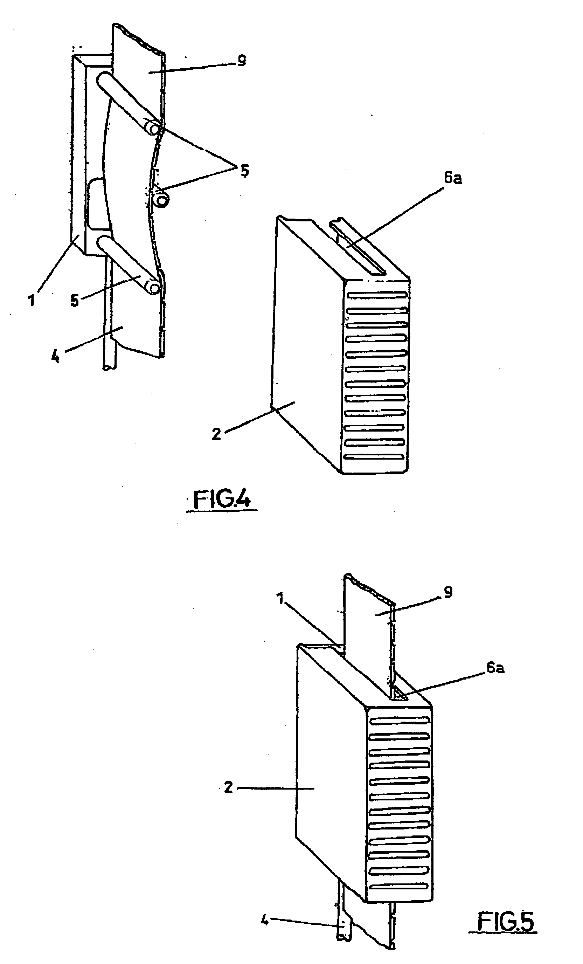

Figure 4 shows an exploded view of the assembly of the load cell of the invention, in which both elements of the body 1 and the casing 2 in a condition prior to their coupling can be seen, and which shows the belt 9 for supporting the load coupled to the rods 5 of said cell body. As has been stated, the figure shows the adaptation ability of the sizing of the rods to the width magnitude shown by the mentioned belt 9. The condition of complete coupling and therefore of assembled cell is shown in Figure 5, in which said body 1 is introduced inside casing 2 and housed in the recessed side areas 8 which have been made in the inner wall of bath larger side walls of the casing 2. As will be understood, in these conditions, the projecting portions 7 form a stop for the inner side edge of the belt 9, preventing a longer longitudinal contact with the corresponding wall to avoid large stresses which may tend to the separation between the body 1 and the casing 2.

It is not considered necessary to extend the content of this description in order for a person skilled in the art to understand its scope and the advantages derived from the invention, as well as to develop and put the object thereof into practice.

Nevertheless, it must be understood that the invention has been described according to a preferred embodiment thereof, therefore it can be modified without this entailing any alteration of the essence of said invention, said modifications especially being able to affect the shape, size and/or materials for manufacturing the assembly or its parts.

### LEGEND OF THE DRAWINGS

Figure 3
sección III-III: III-III section

## Claims

1. A load cell for elevators and the like, of the type adapting to load support elements, particularly intended to transform the deformation variations experienced as a result of the variations of the applied load into electric signals with a suitable magnitude for their supply to external measuring and control means, the load cell being of the type including a metallic, elastic solid body (1) having a hollowing (3) for the incorporation of a strain gage, the body (1) comprising three elements in the form of pivots or lags (5) integral with the body, projected orthogonally in relation to the body and arranged in longitudinally unaligned positions, through which a support means to which the load cell is adapted to be coupled to is passing in a successively alternating manner with respect to the mentioned pivots or lugs, the load cell being designed for its use in load devices supported by planar elements such as a belt or the like, wherein:
in addition to the mentioned cell body (1), the load cell is comprising a second element consisting of a closing casing(2) designed for its coupling with said body;
the pivots or lugs for the adaptation to the support belt consisting of rods (5) having a smooth surface and not being provided with grooves or any other recess, and being sized such that they extend to the total width of the belt (9) to which they are adapted;
the casing (2) being generally prismatic, open at one of its smaller side face of access, and provided with openings (6a, 6b) in both its lower and upper faces adapted to allow the passage of the support belt (9), and the casing being provided in its inner faces of both larger side walls, in the areas close to the open smaller side face of access, with a recessed area (8) at each side, sized according to the cell body (1) and adapted to receive, house and retain the body during the operative assembly condition of the cell.

2. A load cell according to claim 1, **characterized by** the formation of projecting bosses (7) arranged transversely at the inner face of the smaller side wall opposite to the one of access and forming limiting stops for the inner side edge of the support belt (9) in the condition of mutually coupled casing (2) and body (1).

## Patentansprüche

1. Lastzelle für Lifte und dergleichen von dem Typ der Anpassung an Lasttragelemente, insbesondere vorgesehen für die Umsetzung von Deformationsschwankungen, die als Ergebnis von Schwankungen der angelegten Last auftreten, in elektrische Signale mit einem geeigneten Wert für ihre Zuführung zu einer externen Mess- und Steuerungseinrichtung, wobei die Lastzelle von dem Typ ist, der einen metallischen elastischen soliden Körper (1) mit einer Aussparung (3) für den Einbau eines Dehnungsmessstreifens besitzt, wobei der Körper (1) drei Elemente in Form von Zapfen oder Vorsprüngen (5) integral mit dem Körper aufweist, die orthogonal in Relation zu dem Körper vorstehen und in Längsrichtung in nicht ausgefluchteten Positionen angeordnet sind, durch welche eine Trageinrichtung, mit der die Lastzelle gekoppelt werden kann, in einer abwechselnd alternierenden Weise bezüglich der erwähnten Zapfen oder Vorsprünge hindurchgeht, wobei die Lastzelle für ihre Verwendung in Lasteinrichtungen konzipiert ist, die von flächigen Elementen, wie z. B. einem Gurt oder dergleichen getragen werden,
wobei zusätzlich zu dem erwähnten Zellenkörper (1) die Lastzelle ein zweites Element aufweist, das aus einem Abschlussgehäuse (2) besteht, das für seine Kopplung mit dem Körper ausgelegt ist;
wobei die Zapfen oder Vorsprünge für die Anpassung an den Traggurt aus Stangen (5) bestehen, die eine glatte Oberfläche besitzen und nicht mit Nuten oder irgendwelchen anderen Aussparungen versehen sind, und wobei die Abmessungen so gewählt sind, dass sie sich über die gesamte Breite des Gurtes (9) erstrecken, an den sie angepasst sind;
wobei das Gehäuse (2) im allgemeinen prismenförmig ausgebildet, offen an einer seiner kleineren Seitenwände für den Zugang ausgebildet ist und mit Öffnungen (6a, 6b) in seinen beiden oberen und unteren Seiten, die für den Durchgang des Traggurtes (9) ausgelegt sind, versehen ist, und wobei das Gehäuse an seinen Innenseiten der beiden größeren Seitenwände in den Bereichen nahe bei der offenen kleineren Seitenwand für den Zugang mit einem Aussparungsbereich (8) an jeder Seite versehen ist, wobei die Bemessung gemäß dem Zellenkörper (1) ausgebildet und dafür ausgelegt ist, den Körper während des operativen Montagezustands der Zelle aufzunehmen, unterzubringen und zu halten.

2. Lastzelle nach Anspruch 1,
**gekennzeichnet durch** die Ausbildung von vorstehenden Vorsprüngen (7), die quer an der Innenseite der kleineren Seitenwand gegenüber dem einen Zugang angeordnet sind und Begrenzungsanschläge für die innere Seitenkante des Traggurtes (9) in dem Zustand bilden, in welchem das Gehäuse (2) und der Körper (1) wechselseitig miteinander gekoppelt sind.

## Revendications

1. Cellule de charge pour ascenseurs et analogues, du type adaptée à des éléments de support de charge, en particulier servant à transformer les variations de déformation, rencontrées en conséquence des variations de la charge appliquée, en signaux électriques avec une grandeur appropriée pour être fournies à des moyens de mesure et de commande externes, la cellule de charge étant du type comprenant un corps plein élastique, métallique (1) comportant une cavité (3) pour incorporer une jauge de contraintes, le corps (1) comprenant trois éléments sous la forme de pivots ou ergots (5) d'un seul tenant avec le corps, en saillie orthogonalement par rapport au corps et agencés en des positions non alignées longitudinalement, par lesquels passe un moyen de support auquel la cellule de charge est apte à être accouplée de manière successive et tour à tour relativement aux pivots ou ergots précités, la cellule de charge étant conçue pour être utilisée dans des dispositifs de charge supportés par des éléments plans tels qu'une courroie ou analogue :
outre le corps de cellule (1) précité, la cellule de charge comprend un deuxième élément consistant en un boîtier à fermeture (2) conçu pour être accouplé audit corps ;
les pivots ou ergots pour adaptation à la courroie de support consistant en tiges (5) comportant une surface lisse et étant dépourvues de rainures ou tout autre évidement, et étant dimensionnées de manière à s'étendre sur la largeur totale de la courroie (9) à laquelle elles sont adaptées ;
le boîtier (2) étant généralement prismatique, ouvert au niveau d'une de ses faces latérales d'accès plus petite, et étant pourvu d'ouvertures (6a, 6b) dans ses deux faces supérieure et inférieure aptes à permettre le passage de la courroie de support (9), et le boîtier étant pourvu, dans les faces internes de ses deux parois latérales plus grandes, dans les zones proches de la face latérale plus petite ouverte, d'une zone évidée (8) sur chaque côté, dimensionnée en fonction du corps de cellule (1) et apte à recevoir, loger et retenir le corps au cours de la condition assemblée opérante de la cellule.

2. Cellule de charge selon la revendication 1, **caractérisée par** la formation de bossages (7) en saillie, agencés transversalement au niveau de la face interne de la paroi latérale plus petite opposée à celle d'accès et formant des butées de fin de course pour le bord latéral interne de la courroie de support (9) dans la condition d'accouplement mutuel entre le boîtier (2) et corps (1).
